# EUROPÄISCHE PATENTSCHRIFT

(11) **EP 3 032 694 B1**
(45) Veröffentlichungstag und Bekanntmachung des Hinweises auf die Patenterteilung: **20.09.2017**
(21) Anmeldenummer: 15199393.8
(22) Anmeldetag: 10.12.2015
(51) Int. Cl.: H02J 7/00, H01M 10/00

(54) **AKKU-PACK MIT SCHALTBARER GESAMTKAPAZITÄT**
BATTERY PACK WITH SWITCHABLE TOTAL CAPACITY
PACK BATTERIE À CAPACITÉ TOTALE COMMUTABLE

(30) Priorität: 11.12.2014 DE 102014118465
(43) Veröffentlichungstag der Anmeldung: 15.06.2016
(73) Patentinhaber: TiCad GmbH & Co. KG, 63674 Altenstadt (DE)
(72) Erfinder: HILLESHEIM, Björn, 63808 Haibach (DE)
(74) Vertreter: Stoffregen, Hans-Herbert

(56) Entgegenhaltungen:
- DE-A1- 10 110 940
- DE-A1-102008 064 037
- DE-A1-102012 212 374
- DE-T2- 60 033 833
- GB-A- 1 448 053
- US-A1- 2013 108 905
- US-A1- 2013 307 476

## Beschreibung

Die Erfindung bezieht sich auf einen Akku-Pack zur Versorgung eines mobilen elektrischen Gerätes wie Elektro-Golftrolley mit elektrischer Energie nach dem Oberbegriff des Anspruchs 1.

Ein Akku-Pack der bekannten Art ist aus der DE 101 10 940 A1 bekannt. Der bekannte Akku-Pack in Form einer Sicherheitsbatterie umfasst wenigstens zwei Batterieanordnungen, von denen die eine als Reserve-Batterieanordnung unter Vermittlung einer Steuereinheit im Bedarfsfall automatisiert aktivierbar ist. Die Aktivierung erfolgt in Abhängigkeit des Ladezustandes einer Haupt-Batterieanordnung. Bei Aktivierung der Steuereinheit wird die Reserve-Batterieanordnung parallel zu der Haupt-Batterieanordnung geschaltet.

Die DE 10 2012 212 374 A1 betrifft ein Batteriesystem mit unterteilbarem Batteriestrang. Dieser Batteriestrang umfasst eine Vielzahl in Reihe geschalteter Batteriezellen sowie eine Vielzahl an Sicherungen, die zu den Batteriezellen in Reihe geschaltet sind. Das Batteriesystem weist zudem zwei Anschlusse auf, die jeweils mit einem Ende des Batteriestrangs verbunden sind. Über zwei Schaltmittel ist ein elektrischer Pfad parallel zu einem Abschnitt des Batteriestrangs schaltbar, wobei der Abschnitt mindestens eine Batteriezelle sowie mindestens eine Sicherung beinhaltet. Über die Schaltmittel kann mindestens eine Batteriezelle kurzgeschlossen werden. So kann die Spannung der Teilstränge im Falle eines Unfalls beispielsweise auf einen Wert limitiert werden, der für den Menschen ungefährlich ist.

Die DE 10 2008 064 037 A1 betrifft eine Schaltungsanordnung zwischen einem elektrischen Energiespeicher und einem vorzugsweise netzunabhängig betriebenen Gerät, in das der Energiespeicher einsetzbar ist. Dabei weist der Energiespeicher zumindest zwei getrennte Akkumulator-Kapazitäten mit elektrischen Anschlüssen auf, wobei erst mit Einsetzen des Energiespeichers in das Gerät die elektrischen Anschlüsse der mindestens zwei Akkumulator-Kapazitäten zur Erzeugung einer Gesamtkapazität elektrisch zusammengeschaltet oder zusammenschaltbar sind. Auf diese Weise sollen bei Einsatz von Akkumulator-Kapazitäten mit hoher Energiedichte, insbesondere solchen auf Lithium-Basis, Gefahren durch exotherme Reaktionen vermieden werden.

Bei dem bekannten Akku-Pack sind die Plus- und Masse-Kontakte der einzelnen Zellen-Packs jeweils einzeln mit einem Kontaktstift einer Kontaktleiste verbunden. Die Plus- und Masse-Kontakte werden entweder in einem Geräte-Gegenstecker oder in einem Steuergerät des Gerätes elektrisch verschaltet. Da die elektrischen Anschlüsse der einzelnen Zellen-Packs an den Kontaktstiften der Kontaktleiste frei zugänglich sind, ist nicht ausgeschlossen, dass durch versehentliches Verbinden der Kontaktstifte Kurzschlüsse der einzelnen Zellen-Packs bzw. zwischen den Zellen-Packs entstehen können.

Die GB 1 448 053 A bezieht sich auf ein elektrisches Ladesystem. Beschrieben ist ein portables Gehäuse mit zwei Batterien und einem manuell oder elektrisch tätigbaren Schaltelement. Die Anschlüsse der Batterien sind mittels des Schaltelementes untereinander und mit einem Plus-Kontakt und einem Masse-Kontakt eines Steckverbinders verbindbar. Bei dieser Ausführungsform ist vorgesehen, dass das Schaltelement bei Verbindung des Steckverbinders mit einem Ladegerät betätigt wird, so dass die Batterien parallel geschaltet und in diesem Zustand geladen werden. Nach Entkoppeln des Akku-Packs von dem Ladegerät wird das Schaltelement entweder manuell oder elektrisch in einen Zustand geschaltet, in dem die Batterien in Reihe geschalten sind, so dass an den Kontaktstiften des Steckverbinders die Summe der Batteriespannungen anliegt.

Bei der bekannten Ausführungsform sind in beiden Stellungen des Schaltelementes beide Batterien entweder in Parallelschaltung oder in Reihenschaltung mit den Kontaktstiften des Steckverbinders verbunden, so dass bei einem Kurzschluss zwischen den Kontaktstiften der Energieinhalt beider Batterien entladen wird.

Die DE 600 33 833 T2 bezieht sich auf eine elektrische Vorrichtung mit Batterieeinheiten. Die elektrische Vorrichtung enthält eine Mehrzahl von Batterieeinheiten und eine gemeinsame Ladeeinheit zum Laden ihrer jeweiligen Speicherbatteriepakete, die jeweils abnehmbar in einem Hauptkörper der Vorrichtung angebracht sind. Die Batterieeinheiten sind nicht in einem gemeinsamen Gehäuse angeordnet.

Die US 2013/0307476 A1 bezieht sich auf ein Verfahren und ein System zur Wartung von Hochspannungs-Batterie-Packs, wobei in einem Gehäuse zumindest zwei getrennte Zellen-Packs angeordnet sind. Die Zellen-Packs sind in Reihe geschaltet, wobei ein Plus-Kontakt eines ersten Zellen-Packs der Reihenschaltung mit einem Plus-Kontakt und einem Masse-Kontakt eines letzten Zellen-Packs der Reihenschaltung mit einem Masse-Kontakt eines Akku-Pack-Steckverbinders verbunden sind. Auch ist ein Schaltelement vorgesehen, mit dem die Anschlüsse der Reihenschaltung mit einem zweiten Akku-Pack-Steckverbinder verbunden werden können, ohne dass allerdings die Gesamtkapazität des Akku-Packs schaltbar ist.

Die US 2013/0108905 A1 bezieht sich auf Batterieeinheiten mit Akku-Packs, die als Schubladen ausgebildet und in einen Schrank einsteckbar sind. Über einen Batterie-Steckverbinder wird eine Verbindung zu einem Energiebus und einem Datenbus hergestellt. In der Batterieeinheit sind auch Schaltelemente vorgesehen, die jedoch nicht zum internen Verschalten der elektrischen Anschlüsse der Akku-Packs vorgesehen sind, um die an den Kontakten des Batterie-Steckverbinders anliegende Gesamtkapazität zu beeinflussen.

Davon ausgehend liegt der vorliegenden Erfindung die Aufgabe zu Grunde, ein Akku-Pack der eingangs genannten Art derart weiterzubilden, dass die Sicherheit des Akku-Packs bei Reisen und beim Transport erhöht wird. Insbesondere soll die Stärke einer exothermen Reaktion aufgrund eines Kurzschlusses zwischen Kontakten eines Akku-Pack-Steckverbinders trotz hoher Betriebsspannung reduziert werden.

Die Aufgabe wird erfindungsgemäß durch die Merkmale des Anspruchs 1 gelöst.

In dem Gehäuse des Akku-Packs ist zumindest ein Schaltelement zum internen Verschalten der elektrischen Anschlüsse der Zellen-Packs angeordnet. Das zumindest eine Schaltelement ist durch Einsetzen des Akku-Packs in das Gerät und/oder durch elektrische Verbindung des Akku-Pack-Steckverbinders mit dem Gerät-Gegensteckverbinder schaltbar.

Die Gesamtkapazität der zumindest zwei Zellen-Packs ist über nur zwei Kontakte, einen Masse-Kontakt sowie einen Plus-Kontakt, abgreifbar, wobei die elektrischen Anschlüsse der Zellen-Packs in einer ersten Betriebsart, in der der Akku-Pack nicht in dem Gerät eingesetzt bzw. nicht elektrisch mit diesem verbunden ist, über das zumindest eine Schaltelement so verschaltet sind, dass zwischen dem Plus-Kontakt und dem Masse-Kontakt des Akku-Pack-Steckverbinders nur die Kapazität bzw. Spannung eines einzelnen Zellen-Packs abgreifbar ist und dass in einer zweiten Betriebsart, in der der Akku-Pack in dem Gerät eingesetzt bzw. elektrisch mit dem Gerät verbunden ist, die elektrischen Anschlüsse der zumindest zwei Zellen-Packs in Reihe oder parallel geschaltet sind, so dass zwischen dem Plus-Kontakt und dem Masse-Kontakt die Gesamtkapazität abgreifbar ist.

Gegenüber dem Stand der Technik wird der Vorteil erreicht, dass in der ersten Betriebsart, d. h. dann, wenn der Akku-Pack nicht mit dem Gerät verbunden ist, an den Kontakten nur eine geringe Spannung bzw. Kapazität anliegt, so dass das Risiko einer exothermischen Reaktion bei Kurzschluss minimiert ist. Folglich liegt die Gesamtkapazität nur dann an den Kontakten des Akku-Packs an, wenn dieser in dem Gerät eingesetzt bzw. mit der Antriebssteuerung oder dem Ladegerät verbunden ist.

Gegenüber dem Stand der Technik wird der Vorteil erreicht, dass die elektrischen Anschlüsse der Zellen-Packs nicht nach Außen geführt werden müssen. Ferner wird eine einfache elektrische Steckverbindung mit nur wenigen Kontakten zwischen dem Akku-Pack und dem Gerät ermöglicht.

Eine weitere bevorzugte Ausführungsform sieht vor, dass das zumindest eine Schalteelement durch elektrische Verbindung des Akku-Packs mit einer in dem elektrischen Gerät integrierten Antriebssteuerung und/oder durch elektrische Verbindung mit einem externen Ladegerät schaltbar ist.

Hierzu ist vorgesehen, dass der Akku-Pack einen Akku-Pack-Steckverbinder mit einem Steuerkontakt aufweist, der mit einem Steuer-Gegenkontakt der Antriebssteuerung oder des Ladegerätes verbindbar ist, wobei an dem Steuer-Gegenkontakt ein Steuersignal wie Steuerspannung anliegt, über das das zumindest eine Schalteelement steuerbar ist, um die elektrischen Anschlüsse der Zellen-Packs zur Erzeugung der Gesamtkapazität elektrisch zusammenzuschalten.

Gemäß einer weiteren bevorzugten Ausführungsform ist vorgesehen, dass das Schaltelement als ein Relais mit einem Wechselkontakt ausgebildet ist.

Dabei ist ein zweiter elektrischer Anschluss wie Plus-Kontakt des ersten Zellen-Packs über einen Öffner-Kontakt mit einem zweiten elektrischen Anschluss wie Plus-Kontakt des zweiten Zellen-Packs verbunden, wobei der Plus-Kontakt des ersten Zellen-Packs über den Schließer-Kontakt mit einem ersten elektrischen Anschluss wie Masse-Kontakt des zweiten Zellen-Packs verbindbar ist und wobei ein erster elektrischer Anschluss wie Masse-Kontakt des ersten Zellen-Packs mit dem Masse-Kontakt des Akku-Pack-Steckverbinders und der Plus-Kontakt des zweiten Zellen-Packs mit dem Plus-Kontakt des Akku-Pack-Steckverbinders verbunden ist.

Vorzugsweise ist ein erster Anschluss einer Relaisspule des Relais über eine erste Diode mit dem Plus-Kontakt des ersten Zellen-Packs und über eine zweite Diode mit dem Plus-Kontakt des zweiten Zellen-Packs verbunden und ein zweiter Anschluss der Relaisspule ist mit zumindest einer Ansteuereinheit wie Transistorstufe verbunden, deren Steuereingang mit dem Steuer-Kontakt des Akku-Pack-Steckverbinders verbunden ist.

Alternativ besteht die Möglichkeit, dass das Schaltelement als mechanisches Schaltelement ausgebildet ist, welches beim Einsetzen des Akku-Packs in das Gerät über ein mechanisches Koppelelement schaltbar ist. Das Schaltelement kann auch als Reed-Kontakt ausgebildet sein, welcher beim Einsetzen des Akku-Packs in das Gerät mittels eines an dem Gerät angeordneten Magneten schaltbar ist.

Vorzugsweise sind die Zellen-Packs als Lithium-Ionen- oder Lithium-Zellen-Packs ausgebildet, wobei jeder Zellen-Pack im Falle des Lithium-Zellen-Packs höchstens einen Lithium-Gehalt von 2 g aufweist oder im Falle des Lithium-Ionen-Zellen-Packs der äquivalente Lithium-Gehalt höchstens 8 g oder 100 Wh beträgt.

Entsprechend einer gewünschten Gesamtkapazität werden die einzelnen Zellen-Packs des Akku-Packs durch die Schalteinheit parallel oder in Reihe geschaltet.

Die Steuerspannung zur Ansteuerung des Relais wird bei elektrischer Verbindung des Akku-Packs mit der Antriebssteuerung bzw. dem Ladegerät bereitgestellt, während die Arbeitsspannung für die Relaisspule in der ersten Betriebsphase von dem ersten Zellen-Pack und während der zweiten Betriebsphase von dem zweiten Zellen-Pack bereitgestellt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden Ausführungsbeispielen.

Es zeigen:
- Fig. 1: eine perspektivische Darstellung eines Elektro-Golftrolleys mit eingesetztem Akku-Pack zur Versorgung eines Elektroantriebs und einer Antriebssteuerung mit elektrischer Energie,
- Fig. 2: eine Draufsicht auf ein Akku-Pack mit geöffnetem Deckel,
- Fig. 3: eine erste Ausführungsform einer Schaltungsanordnung des Akku-Packs mit integrierter Schalteinheit mit Akku-Pack-Steckverbinder zur Verbindung mit der in dem Elektro-Golftrolley integrierten Antriebssteuerung und/oder einem externen Ladegerät und
- Fig. 4: eine zweite Ausführungsform einer Schaltungsanordnung des Akku-Packs mit integrierter Schalteinheit mit Akku-Pack-Steckverbinder zur Verbindung mit der in dem Elektro-Golftrolley integrierten Antriebssteuerung und/oder einem externen Ladegerät

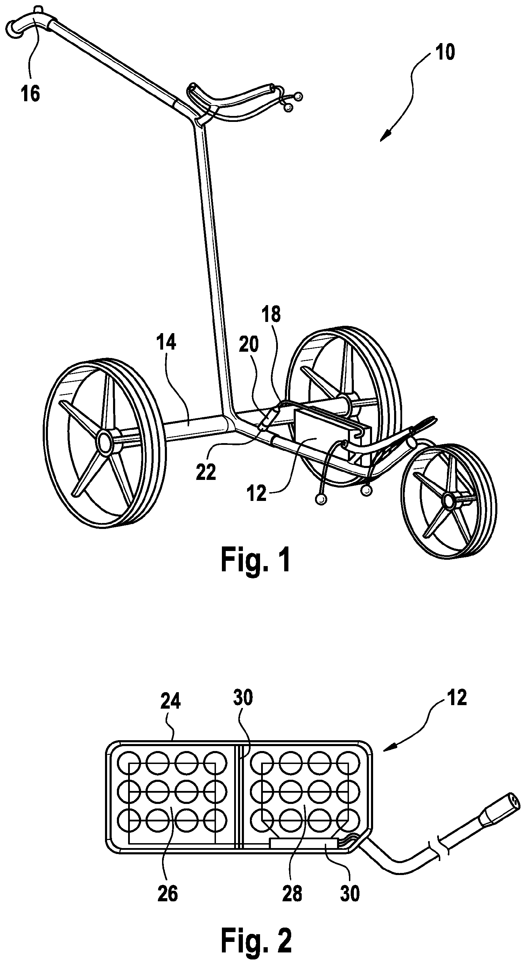

Fig. 1 zeigt in perspektivischer Darstellung einen Elektro-Golftrolley mit eingesetztem Akku-Pack 12 zur Versorgung eines Elektroantriebs 14 und einer in dem Elektro-Golftrolley integrierten Antriebssteuerung 16 mit elektrischer Energie. Aus dem Akku-Pack 12 führt eine elektrische Leitung 18, die über einen Steckverbinder 20 mit einem Gegensteckverbinder 22 des Elektro-Golftrolleys elektrisch mit der Antriebssteuerung 16 verbindbar ist.

Fig. 2 zeigt eine Draufsicht des Akku-Packs 12 bei geöffnetem Gehäuse 24. Der Akku-Pack 12 umfasst zumindest zwei getrennte Zellen-Packs 26, 28, die in dem Gehäuse 24 durch eine Zwischenwand voneinander getrennt angeordnet sind. In dem Akku-Pack 12 ist eine Schalteinheit 30 mit einem Schaltelement 32 integriert, über das elektrische Anschlüsse 34, 36, 38, 40 der Zellen-Packs 26, 28 beim Einsetzen des Akku-Packs in das Gerät oder durch elektrische Verbindung des Akku-Packs mit dem Gerät zur Erzeugung einer Gesamtkapazität elektrisch zusammenschaltbar sind.

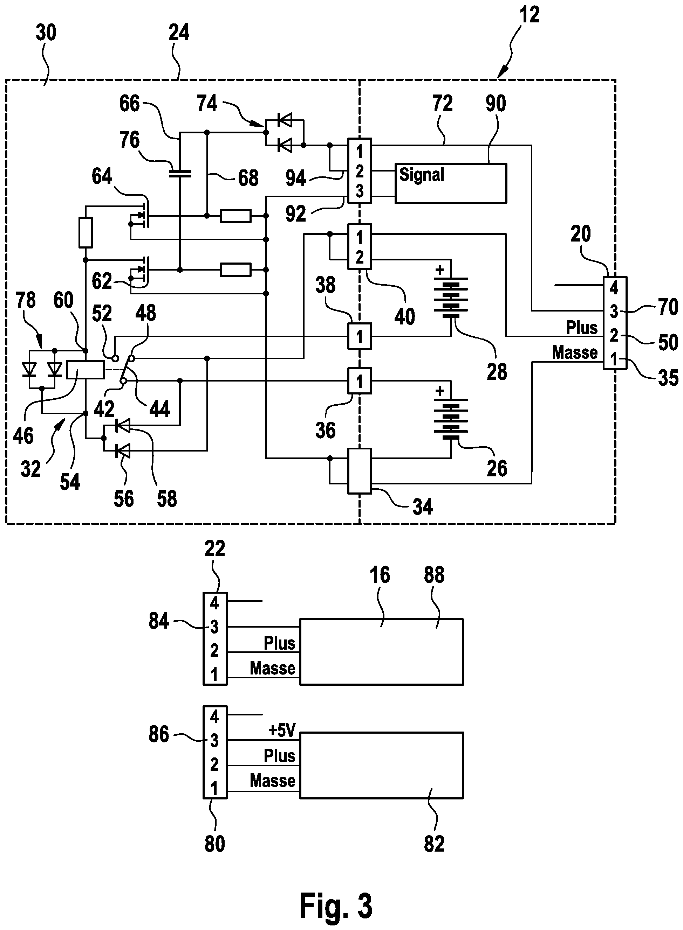

Fig. 3 zeigt eine Schaltungsanordnung des Akku-Packs 12, umfassend das erste Zellen-Pack 26, das zweite Zellen-Pack 28 sowie die in dem Gehäuse 24 integrierte Schalteinheit 30 und den Akku-Pack-Steckverbinder 20. Mittels des Schaltelements 32 sind die elektrischen Anschlüsse 34, 36, 38, 40 der Zellen-Packs in Reihe verschaltbar.

Der erste elektrische Anschluss 34 ist ein Masse-Anschluss des ersten Zellen-Packs 26, welcher mit einem Masse-Anschluss des Akku-Pack-Steckverbinders 20 verbunden ist. Der zweite elektrische Anschluss 36 ist ein Plus-Anschluss des ersten Zellen-Packs 26, der mit einem gemeinsamen Anschluss 42 eines Wechselkontaktes 44 eines Relais 46 verbunden ist.

Das Relais 46 bildet zusammen mit dem Wechselkontakt das Schaltelement 32. Ein Öffner-Kontakt 48 des Wechselkontaktes 44 ist mit dem zweiten elektrischen Anschluss 40 des zweiten Zellen-Packs 28 verbunden, der ein Plus-Kontakt ist. Gleichfalls ist der Plus-Kontakt 40 mit einem Plus-Kontakt 50 des Akku-Pack-Steckverbinders 20 verbunden. Der erste elektrische Anschluss 38 des zweiten Zellen-Packs 28 ist ein Masse-Kontakt und ist mit einem Schließer-Kontakt 52 des Wechselkontakts 44 verbunden.

Zur Energieversorgung der Relaisspule 46 ist diese mit einem ersten Anschluss 54 über eine erste Diode 56 mit einer den Öffner-Kontakt 48 mit dem Plus-Kontakt 40 des zweiten Zellen-Packs 28 verbindenden Leitung verbunden. Des Weiteren ist der erste Anschluss 54 der Relaisspule 46 über eine zweite Diode 58 mit einer den gemeinsamen Anschluss 42 des Wechselkontaktes 44 mit dem Plus-Kontakt 36 verbindenden Leitung verbunden.

Ein zweiter Anschluss 60 mit der Relaisspule 46 ist mit einer ersten Ansteuereinheit 62 und einer zweiten Ansteuereinheit 64 verbunden. Die Ansteuereinheiten 62, 64 sind über Steuerleitungen 66, 68 mit einem Steuerkontakt 70 des Akku-Pack-Steckverbinders 20 verbunden.

Im Verlauf der Steuerleitung 72 sind Schutzdioden 74 angeordnet, die zum Schutz der Ansteuerschaltungen 62, 64 dienen. Betreffend die Ansteuerschaltung 62 ist anzumerken, dass im Verlauf der Steuerleitung 66 ein Kondensator 76 angeordnet ist. Parallel zu der Relaisspule 46 sind Schutzdioden 78 verschaltet.

Die Funktion des erfindungsgemäßen Akku-Packs mit schaltbarer Gesamtkapazität ist wie folgt:

In einer ersten Betriebsart, bei dem die Kontakte 35, 50, 70 des Akku-Pack-Steckverbinders 20 elektrisch nicht mit z. B. dem Gegensteckverbinder 22 der Antriebssteuerung 16 oder einem Gegensteckverbinder 80 eines Ladegerätes 82 verbunden sind, ist der Plus-Kontakt 36 des ersten Zellen-Packs 26 über den Öffner-Kontakt des Wechselkontakts 44 mit dem Plus-Kontakt 40 des zweiten Zellen-Packs 28 und somit mit dem Plus-Kontakt des Akku-Pack-Steckverbinders 20 verbunden. Folglich liegt zwischen dem Masse-Kontakt 35 und dem Plus-Kontakt 50 des Akku-Pack-Steckverbinders die Spannung bzw. Kapazität nur des ersten Zellen-Packs 26 an. Diese kann beispielsweise eine Versorgungsspannung von 14,4 V und eine Kapazität von 100 Wh aufweisen. In der ersten Betriebsart ist der Masse-Anschluss 38 des zweiten Zellen-Packs 28 mit keinem weiteren Kontakt verbunden.

Bei einer zweiten Betriebsart wird durch Verbinden des Akku-Pack-Steckverbinders 20 mit dem Steuergerät-Gegensteckverbinder 22 bzw. dem Ladegerät-Gegensteckverbinder 80 über einen Steuerkontakt 84 bzw. 86 eine Steuerspannung, beispielsweise 7,5 V, an den Steuerkontakt 70 des Akku-Pack-Steckverbinders 20 gelegt.

Über die Steuerleitung 72 wird die Steuerspannung an die Ansteuereinheit 62, 64 gelegt, wodurch im vorliegenden Fall ein elektronisches Schaltelement wie Transistor geschaltet wird, so dass der zweite Anschluss 60 des Relais 46 mit Masse-Potential, d. h., dem Masse-Anschluss 34 des ersten Zellen-Packs 26, verbunden wird. Über die zweite Diode 58 wird die Relaisspule 46 mit Arbeitsspannung versorgt, so dass der Wechselkontakt 44 schaltet.

In der zweiten Betriebsart ist der Plus-Kontakt 36 des ersten Zellen-Packs 26 über den Schließer-Kontakt 52 des Wechselkontakts 44 mit dem Masse-Kontakt 38 des zweiten Zellen-Packs 28 verschaltet, so dass der erste Zellen-Pack mit dem zweiten Zellen-Pack nunmehr in Reihe geschaltet ist. Folglich liegt an dem Plus-Kontakt 50 und dem Masse-Kontakt 35 des Akku-Pack-Steckverbinders 20 die Gesamtkapazität bzw. Gesamtspannung in Höhe von ca. 28,8 V zur Versorgung der elektrischen Antriebssteuerung an.

Sobald der Akku-Pack-Steckverbinder 20 von dem Gegensteckverbinder 22 bzw. Ladegerät-Gegensteckverbinder 80 getrennt wird, liegt keine Steuerspannung mehr an dem Steuerkontakt 70 an, so dass das Relais 46 abfällt mit der Folge, dass die Reihenschaltung zwischen erstem und zweitem Zellen-Pack aufgehoben ist und nur noch die Kontakte 34 und 36 des ersten Zellen-Packs 26 an den Kontakten 50, 35 des Akku-Pack-Steckverbinders 20 anliegen. Folglich wird der Akku-Pack 12 wieder in einen sicheren Zustand geschaltet.

Optional kann über das Steuersignal an dem Steuerkontakt 70 des Akku-Pack-Steckverbinders 20 in Verbindung mit dem Gegensteckverbinder 22 auch ein in dem Akku-Pack integriertes Funkmodul 88 einer Funkfernsteuerung 90 versorgt werden. Das Funkmodul 90 der Funkfernsteuerung 88 ist in dem Akku-Pack integriert und ist mit einem ersten Anschluss 92 an Massepotential des Masse-Kontaktes 34 und mit einem zweiten Anschluss 94 an der Steuerleitung 72 bzw. dem Steuerkontakt 70 angeschlossen.

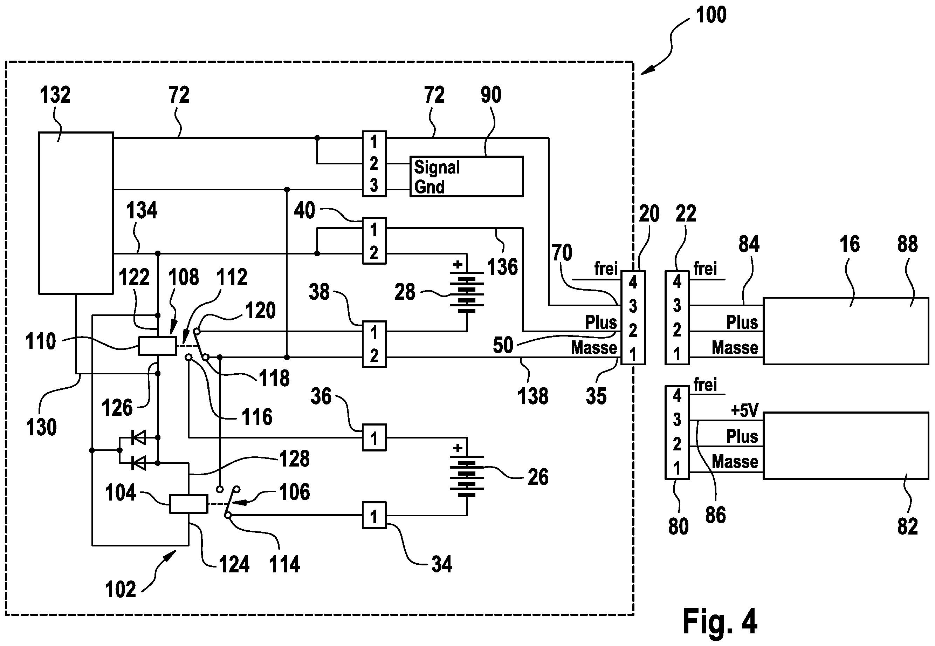

Fig. 4 zeigt eine zweite Ausführungsform einer Schaltungsanordnung eines Akku-Packs 92, wobei identische Elemente mit identischen Bezugszeichen bezeichnet sind.

Die Schaltungsanordnung des Akku-Packs 92 unterscheidet sich von der ersten Ausführungsform des Akku-Packs 12 dadurch, dass zur Verschaltung der Zellen-Packs 26, 28 ein erstes Relais 102 mit Relaisspule 104 und Wechselkontakt 106 sowie ein zweites Relais 108 mit Spule 110 und Wechselkontakt 112 vorgesehen ist. Die Relais 102, 108 sind in dem Akku-Pack 100 derart angeordnet, dass bei einem mechanischen Stoß gegen den Akku-Pack 100 ein unbeabsichtigtes "mechanisches" Schalten des Relaiskontaktes zum Verschalten der Zellen ausgeschlossen ist. Dabei sind die Relais 102, 108 derart positioniert, dass mechanische Wirkrichtungen der Spulenanker bzw. Relaiskontakte um 90° versetzt bzw. gedreht sind, so dass bei einem Stoß, z. B. bei einem Fallschaden, ausgeschlossen ist, dass beide Relais versehentlich gleichzeitig "mechanisch" schalten.

Bei der Ausführungsform gemäß Fig. 4 ist der elektrische Anschluss 34 als Masse-Kontakt mit einem gemeinsamen Anschluss 114 des Wechselkontaktes 114 verbunden. Der elektrische Anschluss 36 ist als Plus-Kontakt mit einem Schließer-Kontakt des Wechselkontaktes 112 des Relais 108 verbunden.

Der elektrische Anschluss 38 des zweiten Zellen-Packs 28 ist als Masse-Kontakt mit dem Masse-Kontakt 35 des Akku-Pack-Steckverbinders 20 sowie mit einem Öffner-Kontakt 118 des Wechselkontakts 112 verbunden. Gleichzeitig ist der elektrische Anschluss 38 auch mit dem gemeinsamen Kontakt 120 des Wechselkontaktes 112 verbunden.

Der elektrische Anschluss 40 ist als Plus-Kontakt mit dem Plus-Kontakt 50 des Akku-Pack-Steckverbinders 20 verbunden sowie zur Spannungsversorgung der Relais 108, 102 mit einem ersten Anschluss 122 der Relaisspule 110 und einem ersten Anschluss 124 der Relaisspule 104 verbunden. Zweite Anschlüsse 126, 128 der Relaisspulen sind über eine Verbindungsleitung 130 mit einer Steuerschaltung 132 verbunden, um die Relaisspulen zu schalten. Das Schaltsignal wird über die Steuerleitung 72 der Steuerschaltung 132 zugeführt. Über eine Verbindungsleitung 134 kann das Potenzial des elektrischen Anschlusses 40 durch die Schalteinheit 132 erfasst werden.

In einer ersten Betriebsart, die in Fig. 4 dargestellt ist, liegt das zweite Zellen-Pack 28 über die Verbindungsleitungen 136, 138 einerseits an dem Plus-Kontakt 50 und andererseits an dem Masse-Kontakt 35 des Akku-Pack-Steckverbinders 20 an, so dass die Steuerung bzw. Kapazität eines Zellen-Packs anliegt.

In einer zweiten Betriebsart, d. h. dann, wenn der Akku-Pack-Steckverbinder 20 entweder mit dem Gegensteckverbinder 22 der Antriebssteuerung 16 oder dem Gegensteckverbinder 80 des Ladegerätes 82 verbunden ist, wird ein Steuersignal auf die Steuerleitung 72 gelegt, so dass über die Schalteinheit 132 die Relais 102, 108 von einem ersten Zustand in einen zweiten Zustand geschaltet werden.

In dem zweiten Zustand wird der elektrische Anschluss 38, d. h. der Masse-Kontakt 112 und der Schließer-Kontakt 116 mit dem elektrischen Anschluss 36, d. h. dem Plus-Kontakt des ersten Zellen-Packs 26, verbunden. Ferner wird der elektrische Anschluss 34, d. h. der Masse-Kontakt des Zellen-Packs 26, über den Schließer-Kontakt des Wechselkontaktes 106 mit dem elektrischen Anschluss 38, d. h. dem Masse-Kontakt des zweiten Zellen-Packs verbunden, so dass beide Zellen-Packs 26, 28 in Reihe geschaltet sind.

Durch Trennen des Akku-Pack-Steckverbinders 20 von dem Gegensteckverbinder 22 bzw. 80 wird die Steuerspannung abgeschaltet, so dass die Relais abfallen und den ersten Betriebszustand einnehmen mit der Folge, dass an den Kontakten 50, 35 nur die Spannung des Zellen-Packs 28 anliegt.

Der erfindungsgemäße Akku-Pack mit schaltbarer Gesamtkapazität zeichnet sich gegenüber dem Stand der Technik insbesondere durch eine erhöhte Sicherheit und einen geringen Verdrahtungsaufwand aus. Die erhöhte Sicherheit ist dadurch gewährleistet, dass bei dem erfindungsgemäßen Akku-Pack eine versehentliche Verbindung der elektrischen Anschlüsse 34, 36, 38, 40 der Zellen-Packs 26, 28 von außen unmöglich ist. Der Akku-Pack-Steckverbinder 20 weist lediglich zwei Kontakte 35, 50 auf, an denen in der ersten Betriebsart nur die Spannung eines Zellen-Packs anliegt.

Auch wird die Verschaltung bzw. Verdrahtung zwischen dem Akku-Pack-Steckverbinder 20 sowie dem Steuergerät-Gegensteckverbinder bzw. Ladegerät-Gegensteckverbinder vereinfacht, da nur drei Leitungen erforderlich sind.

## Patentansprüche

1. Akku-Pack (12; 100) zur Versorgung eines mobilen elektrischen Gerätes (10) wie Elektro-Golftrolley mit elektrischer Energie, wobei der Akku-Pack (12; 100) ein Gehäuse (24) mit zumindest zwei getrennten Zellen-Packs (26, 28) mit elektrischen Anschlüssen (34, 36, 38, 40) aufweist, wobei die elektrischen Anschlüsse der Zellen-Packs (26, 28) mittels zumindest eines in dem Gehäuse (24) des Akku-Packs (12; 100) angeordneten Schaltelementes (32; 102, 108) mit einem einzigen Plus-Kontakt (50) und einem einzigen Masse-Kontakt (35) eines Akku-Pack-Steckverbinders (20) zur Erzeugung einer Gesamtkapazität intern elektrisch verschaltbar sind, wobei die elektrischen Anschlüsse (34, 36, 38, 40) eines ersten Zellen-Packs (26) in einer ersten Betriebsart, in der der Akku-Pack-Steckverbinder (20) nicht elektrisch mit einem Geräte-Gegensteckverbinder (22, 88) verbunden ist, über das zumindest eine Schaltelement (32, 102, 108) so verschaltet sind, dass zwischen dem Masse-Kontakt (35) und dem Plus-Kontakt (50) die Spannung des ersten Zellen-Packs (26) anliegt,
**dadurch gekennzeichnet,**
**dass** das zumindest eine Schaltelement (32; 102, 108) durch elektrische Verbindung des Akku-Pack-Steckverbinders (20) mit einem Geräte-Gegensteckverbinder (22, 88) einer Antriebssteuerung (16) in eine zweite Betriebsart schaltbar ist, in der die elektrischen Anschlüsse (34, 36) des ersten Zellen-Packs (26) in Reihe mit den elektrischen Anschlüssen (38, 40) eines zweiten Zellen-Packs (28) geschaltet sind, so dass zwischen dem Plus-Kontakt (50) und dem Masse-Kontakt (35) die Gesamtspannung des ersten und zweiten Zellen-Packs (26, 28) anliegt.

2. Akku-Pack nach Anspruch 1,
**dadurch gekennzeichnet,**
**dass** das zumindest eine Schaltelement (32; 102, 108) durch elektrische Verbindung mit einem externen Ladegerät (82) schaltbar ist.

3. Akku-Pack nach Anspruch 1 oder 2,
**dadurch gekennzeichnet,**
**dass** der Akku-Pack-Steckverbinder (20) einen Steuerkontakt (70) aufweist, der mit einem Steuer-Gegenkontakt (84) der Antriebssteuerung (16) oder des Ladegerätes (82) verbindbar ist, wobei an dem Steuer-Gegenkontakt ein Steuersignal wie Steuerspannung anliegt, über das das zumindest eine Schaltelement steuerbar ist, um die elektrischen Anschlüsse der Zellen-Packs zur Erzeugung der Gesamtkapazität elektrisch zusammenzuschalten.

4. Akku-Pack nach zumindest einem der vorhergehenden Ansprüche,
**dadurch gekennzeichnet,**
**dass** das Schaltelement (32) als Relais (46) mit einem Wechselkontakt (44) ausgebildet ist.

5. Akku-Pack nach zumindest einem der vorhergehenden Ansprüche,
**dadurch gekennzeichnet,**
**dass** ein zweiter elektrischer Anschluss (36), wie Plus-Kontakt des ersten Zellen-Packs (26) über einen Öffner-Kontakt (48) des Wechselkontakts (44) mit einem zweiten elektrischen Anschluss (40) wie Plus-Kontakt des zweiten Zellen-Packs (28) verbunden ist, dass der zweite elektrische Anschluss (36) wie Plus-Kontakt des ersten Zellen-Packs (26) des weiteren über den Schließer-Kontakt (52) mit einem ersten elektrischen Anschluss wie Masse-Kontakt (38) des zweiten Zellen-Packs (28) verbindbar ist und dass ein erster elektrischer Anschluss wie Masse-Kontakt (34) des ersten Zellen-Packs (26) mit dem Masse-Kontakt (35) des Akku-Pack-Steckverbinders (20) und der zweite elektrische Anschluss wie Plus-Kontakt (40) des zweiten Zellen-Packs (28) mit dem Plus-Kontakt (50) des Akku-Pack-Steckverbinders (20) verbunden ist.

6. Akku-Pack nach zumindest einem der vorhergehenden Ansprüche,
**dadurch gekennzeichnet,**
**dass** ein erster Anschluss (54) der Relaisspule (46) über eine erste Diode (58) mit dem ersten elektrischen Anschluss (36) wie Plus-Kontakt des ersten Zellen-Packs und über eine zweite Diode (56) mit dem zweiten elektrischen Anschluss (40) wie Plus-Kontakt des zweiten Zellen-Packs (28) verbunden ist und dass ein erster Anschluss (60) der Relaisspule (46) mit zumindest einer Ansteuereinheit wie Transistorstufe verbunden ist, deren Steuereingang (66, 68) mit dem Steuer-Kontakt (70) des Akku-Pack-Steckverbinders (20) verbunden ist.

7. Akku-Pack nach zumindest einem der vorhergehenden Ansprüche,
**dadurch gekennzeichnet,**
**dass** der Akku-Pack (100) zwei Schaltelemente (102, 108) in Form von Relais (104, 110) mit jeweils einem Wechselkontakt (106, 112) aufweist, wobei die Relais (104, 110) derart zueinander angeordnet sind, dass eine mechanische Wirkrichtung der Kontakte (106, 112) zueinander versetzt, vorzugsweise um 90° zueinander verdreht, sind.

8. Akku-Pack nach zumindest einem der vorhergehenden Ansprüche,
**dadurch gekennzeichnet,**
**dass** das zumindest eine Schaltelement als mechanisches Schaltelement ausgebildet ist, welches beim Einsetzen des Akku-Packs in das Gerät über ein mechanisches Koppelelement schaltbar ist.

9. Akku-Pack nach zumindest einem der vorhergehenden Ansprüche,
**dadurch gekennzeichnet,**
**dass** das zumindest eine Schaltelement als Reed-Kontakt ausgebildet ist, welches beim Einsetzen des Akku-Packs in das Gerät mittels eines an dem Gerät angeordneten Magneten schaltbar ist.

10. Akku-Pack nach zumindest einem der vorhergehenden Ansprüche,
**dadurch gekennzeichnet,**
**dass** die Zellen-Packs als Lithium-Ionen- oder Lithium-Zellen-Packs ausgebildet sind, wobei jeder Zellen-Pack im Falle des Lithium-Zellen-Packs höchstens einen Lithium-Gehalt von 2 g aufweist oder im Falle des Lithium-Ionen-Zellen-Packs der äquivalente Lithium-Gehalt höchstens 8 g oder 100 Wh beträgt.

## Claims

1. Battery pack (12; 100) for supplying electrical energy to a mobile electrical apparatus (10) such as an electric golf trolley, said battery pack (12; 100) having a housing (24) with at least two separate cell packs (26, 28) with electrical connections (34, 36, 38, 40), said electrical connections of the cell packs (26, 28) being internally electrically interconnectable, by means of at least one switching element (32; 102, 108) arranged in the housing (24) of the battery pack (12; 100), to a single positive contact (50) and to a single earth contact (35) of a battery pack connector (20) in order to generate a total capacity, where the electrical connections (34, 36, 38, 40) of a first cell pack (26) are, in a first operating mode in which the battery pack connector (20) is not electrically connected to an apparatus mating connector (22, 88), interconnected by the at least one switching element (32, 102, 108) such that the voltage of the first cell pack (26) is applied between the earth contact (35) and the positive contact (50),
wherein
the at least one switching element (32; 102, 108) is, by the electrical connection of the battery pack connector (20) to an apparatus mating connector (22, 88) of a drive control (16), switchable to a second operating mode in which the electrical connections (34, 36) of the first cell pack (26) are connected in series with the electrical connections (38, 40) of a second cell pack (28) such that the overall voltage of said first and second cell packs (26, 28) is applied between the positive contact (50) and the earth contact (35).

2. Battery pack according to claim 1,
wherein
the at least one switching element (32; 102, 108) is switchable by electrical connection to an external charger (82).

3. Battery pack according to claim 1 or 2,
wherein
the battery pack connector (20) has a control contact (70) connectable to a mating control contact (84) of the drive control (16) or of the charger (82), where a control signal such as a control voltage is applied at the mating control contact, by which signal the at least one switching element is controllable in order to electrically interconnect the electrical connections of the cell packs in order to generate the total capacity.

4. Battery pack according to at least one of the preceding claims,
wherein
the switching element (32) is designed as a relay (46) with a changeover contact (44).

5. Battery pack according to at least one of the preceding claims,
wherein
a second electrical connection (36) such as a positive contact of the first cell pack (26) is connected via a normally closed contact (48) of the changeover contact (44) to a second electrical connection (40) such as a positive contact of the second cell pack (28), wherein the second electrical connection (36) such as a positive contact of the first cell pack (26) is furthermore connectable via the normally open contact (52) to a first electrical connection such as an earth contact (38) of the second cell pack (28), and wherein a first electrical connection such as an earth contact (34) of the first cell pack (26) is connected to the earth contact (35) of the battery pack connector (20) and the second electrical connection such as a positive contact (40) of the second cell pack (28) is connected to the positive contact (50) of the battery pack connector (20).

6. Battery pack according to at least one of the preceding claims,
wherein
a first connection (54) of the relay coil (46) is connected via a first diode (58) to the first electrical connection (36) such as a positive contact of the first cell pack and via a second diode (56) to the second electrical connection (40) such as a positive contact of the second cell pack (28), and wherein a first connection (60) of the relay coil (46) is connected to at least one control unit such as a transistor stage, whose control input (66, 68) is connected to the control contact (70) of the battery pack connector (20).

7. Battery pack according to at least one of the preceding claims,
wherein
the battery pack (100) has two switching elements (102, 108) in the form of relays (104, 110) each having one changeover contact (106, 112), said relays (104, 110) being arranged relative to one another such that the mechanical working directions of the contacts (106, 112) are offset to one another, and preferably rotated by 90° to one another.

8. Battery pack according to at least one of the preceding claims,
wherein
the at least one switching element is designed as a mechanical switching element, which is switchable by a mechanical coupling element when the battery pack is inserted into the apparatus.

9. Battery pack according to at least one of the preceding claims,
wherein
the at least one switching element is designed as a Reed contact, which is switchable by means of a magnet arranged on the apparatus when the battery pack is inserted into the apparatus.

10. Battery pack according to at least one of the preceding claims,
wherein
the cell packs are designed as lithium-ion or lithium cell packs, each cell pack having a maximum lithium content of 2 g in the case of the lithium cell pack or the equivalent lithium content being at most 8 g or 100 Wh in the case of the lithium-ion cell pack.

## Revendications

1. Batterie d'accumulateurs (12 ; 100) pour alimenter un appareil électrique mobile (10) tel un chariot de golf électrique, sachant que la batterie d'accumulateurs (12 ; 100) présente un boîtier (24) avec au moins deux batteries de cellules séparées (26, 28) avec des raccords électriques (34, 36, 38, 40), sachant que les raccords électriques des batteries de cellules (26, 28) sont électriquement interconnectables en interne au moyen d'au moins un élément de commutation (32 ; 102, 108) disposé dans le boîtier (24) de la batterie d'accumulateurs (12 , 100) avec un seul contact positif (50) et un seul contact de terre (35) d'un connecteur enfichable (20) de la batterie d'accumulateurs afin de générer une capacité totale, sachant que les raccords électriques (34, 36, 38, 40) d'une première batterie de cellules (26) dans un premier mode de fonctionnement dans lequel le connecteur enfichable (20) de la batterie d'accumulateurs n'est pas relié électriquement à une contre-fiche de l'appareil (22, 88), sont interconnectés au moyen d'au moins un élément de commutation (32, 102, 108) de sorte que la tension de la première batterie de cellules (26) est appliquée entre le contact de terre (35) et le contact positif (50),
**caractérisée en ce**
**que** ledit au moins un élément de commutation (32 ; 102, 108) est commutable avec une contre-fiche (22, 88) d'une commande d'entraînement (16) dans un second mode de fonctionnement par le biais de la liaison électrique du connecteur enfichable (20) de la batterie d'accumulateurs, dans lequel second mode de fonctionnement les raccords électriques (34, 36) de la première batterie de cellules (26) sont branchés en série avec les raccords électriques (38, 40) d'une seconde batterie de cellules (28) de sorte que la tension totale de la première et de la seconde batterie de cellules (26, 28) est appliquée entre le contact positif (50) et le contact de terre (35).

2. Batterie d'accumulateurs selon la revendication 1,
**caractérisée en ce**
**que** ledit au moins un élément de commutation (32 ; 102, 108) est commutable par le biais d'une liaison électrique avec un chargeur externe (82).

3. Batterie d'accumulateurs selon la revendication 1 ou 2,
**caractérisée en ce**
**que** le connecteur enfichable (20) de la batterie d'accumulateurs présente un contact de commande (70) qui peut être relié à une contre fiche de commande (84) de la commande d'entraînement (16) ou du chargeur (82), sachant qu'un signal de commande tel qu'une tension de commande est présent sur la contre-fiche de commande au moyen de laquelle ledit au moins un élément de commutation peut être commandé pour interconnecter électriquement les raccords électriques des batteries de cellules pour générer la capacité totale.

4. Batterie d'accumulateurs selon au moins une des revendications précédentes,
**caractérisée en ce**
**que** l'élément de commutation (32) est conçu comme un relais (46) doté d'un contact inverseur (44).

5. Batterie d'accumulateurs selon au moins une des revendications précédentes,
**caractérisée en ce**
**qu'**un second raccord électrique (36) tel le contact positif de la première batterie de cellules (26) est relié, par le biais d'un contact normalement fermé (48) du contact inverseur (44), à un second raccord électrique (40) tel le contact positif de la seconde batterie de cellules (28), et que le second raccord électrique (36) tel le contact positif de la première batterie de cellules (26) peut être relié en outre par le biais du contact normalement ouvert (52) à un premier raccord électrique tel le contact de terre (38) de la seconde batterie de cellules (28), et qu'un premier raccord électrique tel le contact de terre (34) de la première batterie de cellules (26) est relié au contact de terre (35) du connecteur enfichable (20) de la batterie d'accumulateurs, et que le second raccord électrique tel le contact positif (40) de la seconde batterie de cellules (28) est relié au contact positif (50) du connecteur enfichable (20) de la batterie d'accumulateurs.

6. Batterie d'accumulateurs selon au moins une des revendications précédentes,
**caractérisée en ce**
**qu'**un premier raccord (54) de la bobine de relais (46) est relié par le biais d'une première diode (58) au premier raccord électrique (36) tel le contact positif de la première batterie de cellules et, par le biais d'une seconde diode (56), au second raccord électrique (40) tel le contact positif de la seconde batterie de cellules (28), et qu'un premier raccord (60) de la bobine de relais (46) est relié à au moins une unité de commande tel un étage à transistor dont l'entrée de commande (66, 68) est reliée au contact de commande (70) du connecteur enfichable (20) de la batterie d'accumulateurs.

7. Batterie d'accumulateurs selon au moins une des revendications précédentes,
**caractérisée en ce**
**que** la batterie d'accumulateurs (100) présente deux éléments de commutation (102, 108) sous forme de relais (104, 110) dotés chacun d'un contact inverseur (106, 112), sachant que lesdits relais (104, 110) sont disposés l'un par rapport à l'autre de telle façon qu'un sens d'action mécanique des contacts (106, 112) entre eux est décalé, de préférence tourné de 90°.

8. Batterie d'accumulateurs selon au moins une des revendications précédentes,
**caractérisée en ce**
**que** ledit au moins un élément de commutation est conçu sous la forme d'un élément de commutation mécanique qui est commutable par le biais d'un élément de couplage mécanique lors de l'insertion de la batterie d'accumulateurs dans l'appareil.

9. Batterie d'accumulateurs selon au moins une des revendications précédentes,
**caractérisée en ce**
**que** ledit au moins un élément de commutation est conçu sous la forme d'un contact Reed à lames souples qui est commutable lors de l'insertion de la batterie d'accumulateurs dans l'appareil au moyen d'un aimant disposé dans l'appareil.

10. Batterie d'accumulateurs selon au moins une des revendications précédentes,
**caractérisée en ce**
**que** les batteries de cellules sont constituées de cellules lithium-ion ou lithium, sachant que chaque batterie de cellules dans le cas de la batterie de cellules au lithium présente au plus une teneur en lithium de 2 g ou que dans le cas de la batterie de cellules lithium-ion, la teneur équivalente en lithium s'élève au plus à 8 g ou 100 Wh.
